(19) Europäisches Patentamt

European Patent Office

Office européen des brevets

(11) **EP 0 846 728 B1**

(12) **EUROPEAN PATENT SPECIFICATION**

(45) Date of publication and mention
of the grant of the patent:
**16.06.2004 Bulletin 2004/25**

(51) Int Cl.7: **C08L 63/00**, C08G 59/50
// (C08L63/00, 15:00)

(21) Application number: **97309472.5**

(22) Date of filing: **25.11.1997**

(54) **Liquid epoxy resin potting material**

Flüssige Epoxidharzvergussmasse

Composition d'enrobage liquide à base de résine époxyde

(84) Designated Contracting States:
**DE FR GB**

(30) Priority: **04.12.1996 JP 32429596**

(43) Date of publication of application:
**10.06.1998 Bulletin 1998/24**

(73) Proprietor: **Sumitomo Bakelite Company Limited
Shinagawa-ku, Tokyo 140 (JP)**

(72) Inventor: **Kazuto, Onami
Utunomiya-city, Tochigi Pref., 321 (JP)**

(74) Representative: **Brookes Batchellor
102-108 Clerkenwell Road
London EC1M 5SA (GB)**

(56) References cited:
- **CHEMICAL ABSTRACTS, vol. 121, no. 10, 5
  September 1994 Columbus, Ohio, US; abstract
  no. 110613, XP002106582 & JP 06 085117 A
  (SUMITOMO BAKELITE CO.) 25 March 1994**
- **DATABASE WPI Section Ch, Week 9305 Derwent
  Publications Ltd., London, GB; Class A17, AN
  93-042615 XP002106585 & JP 04 370137 A
  (TORAY IND INC) , 22 December 1992**
- **CHEMICAL ABSTRACTS, vol. 127, no. 10, 8
  September 1997 Columbus, Ohio, US; abstract
  no. 136836, XP002106583 & JP 09 176294 A
  (SUMITOMO BAKELITE CO.) 8 July 1997**

- **CHEMICAL ABSTRACTS, vol. 127, no. 19, 10
  November 1997 Columbus, Ohio, US; abstract
  no. 263657, XP002106584 & JP 09 235357 A
  (MATSUSHITA ELECTRIC WORKS, LTD.) 9
  September 1997**
- **DATABASE WPI Section Ch, Week 8832 Derwent
  Publications Ltd., London, GB; Class A21, AN
  88-224289 XP002106586 & JP 63 159423 A
  (SUMITOMO BAKELITE CO) , 2 July 1988**
- **DATABASE WPI Section Ch, Week 7542 Derwent
  Publications Ltd., London, GB; Class A21, AN
  75-69608W XP002106587 & JP 50 033300 A
  (MATSUSHITA ELEC IND CO LTD), 31 March
  1975**
- **DATABASE WPI Section Ch, Week 9246 Derwent
  Publications Ltd., London, GB; Class A12, AN
  92-376323 XP002106588 & JP 04 275325 A
  (NIPPON STEEL CHEM CO) , 30 September 1992**
- **DATABASE WPI Section Ch, Week 9409 Derwent
  Publications Ltd., London, GB; Class A12, AN
  94-072083 XP002106589 & JP 06 025512 A
  (SUMITOMO BAKELITE CO) , 1 February 1994**

Remarks:
The file contains technical information submitted
after the application was filed and not included in this
specification

## Description

The present invention relates to a liquid epoxy resin potting material which is used for potting semiconductors.

## PRIOR ART

The lower cost and higher integration trends in semiconductor packaging have changed in the packaging form used from the conventional transfer molding DIP (dual inline package) to COB (chip on board), PPGA (plastic pin grid array), and the like. A liquid potting material is used for potting the PPGA-type semiconductor, but it is not satisfactory in reliability compared to a ceramic-based hermetic potting type. The causes for this include, for example, moisture penetrating through the package-fabricated organic printed circuit boards. Moreover, unlike transfer molding DIPs, a liquid potting material under no pressure, when allowed to flow and be molded, results in residual gas bubbles which lead to cracks when subjected to thermal stresses. Furthermore, when the potting material has a different coefficient of linear expansion from that of the semiconductor chip or the organic baseboard, a delamination occurs at the interface when subjected to a thermal stress, which facilitates moisture penetration.

## OBJECT AND SUMMARY OF THE INVENTION

Intensive study of a way to solve the prior art problems has led to the finding that a composition comprising a specific epoxy resin, aromatic diamine, and elastomer, along with an inorganic filler, provides a potting material with substantially improved semiconductor reliability in an accelerated test such as the PCT (pressure-cooker test) or T/C (cold-heat cycle test), and the like, resulting in the present invention.

The present invention provides a liquid epoxy resin potting material mainly comprising (A) one or more liquid epoxy resins, (B) a liquid alkylated diaminodiphenylmethane, (C) an epoxidized polybutadiene, and (D) an inorganic filler, wherein the ratios of the individual components in weight ratios are:

$$(A) / [(A) + (B)] = 0.65 \sim 0.80$$

and

$$(D) / [(A) + (B) + (C) + (D)] = 0.50 \sim 0.80.$$

characterised in that (C)/[(A)+(B)] = 0.01-0.05, whereby a relaxation effect against thermal stresses is produced. This potting material can substantially improve the reliability of the PPGA-type semi-conductor that uses an organic printed circuit board.

## DETAILED DESCRIPTION OF THE INVENTION

At least 50% by weight of component A used in this invention preferably has a viscosity at 25°C of not more than 8Pa·s. If at least 50% by weight of the epoxy resin component is not a low-viscosity epoxy, the viscosity of the composition will increase, tending to entrain gas bubbles or to not completely fill to the corner edges when the PPGA package is potted by allowing the liquid potting material to flow, leading to undesirable decreases in reliability. The method for measuring the viscosity of the epoxy resin involves a measurement using an E-type viscometer (manufactured by Toki Sangyo KK) at 25°C if the sample is liquid at room temperature and a measurement at 150°C using a high temperature cone plate viscometer if the sample is solid at room temperature.

Any epoxy resin can be used as long as it meets the above requirements and these are not particularly limited, but they are specifically, for example, bisphenol-A diglycidyl ether-type epoxy resin, bisphenol-F diglycidyl ether-type epoxy resin, 3,3',5,5'-tetramethyl-4,4'-dihydroxybiphenyl diglycidyl ether-type epoxy resin, 1,6-dihydroxynaphthalene diglycidyl ether-type epoxy resin, phenol novolak-type epoxy resin, cresol novolak-type epoxy resin, brominated bisphenol-A diglycidyl ether-type epoxy resin, brominated cresol novolak-type epoxy resin, and the like, which may be used singly or in mixtures thereof.

The liquid alkylated diaminodiphenylmethane used in this invention is a diaminodiphenylmethane where 1, 2, or more of the hydrogen atoms of the benzene rings are substituted by an alkyl group such as methyl, ethyl, or the like; having no such alkyl group with 4 or fewer carbon atoms is not preferred because the composition will have a higher viscosity, which tends to entrain gas bubbles or to not completely fill to the corner edges when the package is potted by allowing the liquid potting material to flow in, leading to reduced reliability.

Any of alkylated diaminodiphenylmethanes which satisfy the above requirements can be used with no particular limitation and they are specifically, for example, 3,3'-diethyl-4,4'-diaminodiphenylmethane, 3,3',5,5'-tetramethyl-4,4'-diaminodiphenylmethane, 3,3',5,5'-tetraethyl-4,4'-diaminodiphenylmethane, and the like, which may be used singly or in mixtures thereof

It is preferred for the compounding ratio of the liquid epoxy resin (A) and liquid alkylated diaminodiphenylmethane (B) by weight to be in the range of (A) / [(A) + (B)] = 0.65 ~ 0.80. If the ratio (A) / [(A) + (B)] exceeds 0.80, this results in an increased number of unreacted epoxy groups, which decreases the heat resistance such as the glass transition temperature and the like, and which causes an undesirable reduction in reliability in the cold-heat cycle test. On the other hand, a ratio below 0.65 is not preferred due to decreased storage life for the composition.

The epoxidized polybutadiene (C) used in this invention preferably has a number average molecular weight of 1,000 to 5,000. It is not preferred for it to be less than 1,000 due to a decreased flexibilizing effect while a level exceeding 5,000 decreases the workability, which is not preferable. The epoxy group content (mole % fraction incorporated into the main chain) is preferably 3% to 10%. A mole fraction less than 3% is not preferred because the epoxidized polybutadiene will lack compatibility with the liquid epoxy resin (A), while a level exceeding 10% is not preferred because this will result in its cross-linking with a hardening agent, and failing to take on a "sea-island" structure with no prospect of reducing stress, thereby reducing the flexibilizing effect. Using the epoxidized polybutadiene (C) in the range of a compounding weight ratio of (C) / [(A) + (B)] = 0.01 ~ 0.05, provides a relaxation effect against thermal stresses, which occur during the cold-heat cycle test. A ratio less than 0.01 is not preferred due to a meager effect of improving stress relaxation, nor is a level exceeding 0.05 preferred, because that will give a cured product with a decreased glass transition temperature, a rise in composition viscosity, and a reduced compatibility, and cause a blooming to the surface of the cured product.

The inorganic filler (D) includes fused silica, crystalline silica, and the like. It is available, in general, in spherical form, ruptured form, and the like, but a spherical form filler is most preferred in order to permit incorporating a large amount of filler to reduce the coefficient of linear expansion. It is preferred for the inorganic filler (D) in a weight compounding ratio to be in the range of (D) / [(A) + (B) + (C) + (D)] = 0.50 ~ 0.80. A level below 0.50 is not preferred because of its small effect of reducing the coefficient of linear expansion, nor is a level exceeding 0.80 preferred, because it will increase the viscosity of the composition, thereby decreasing workability. In general, a small-particle-size filler increases the viscosity of the resin composition, resulting in decreased flow and in gas bubble entrainment and insufficient fillings. On the other hand, a large-particle-size filler tends to undergo a sedimentation, which results in nonuniform filler distribution. The nonuniform filler distribution will give portions of the composition with different coefficients of linear expansion, and top portions having lower amounts of filler tending to experience more crack formation. If the largest particle size is greater than a wire interval, there will be a tendency to insufficiently fill underneath the wires and a short-circuiting problem due to wire distortion.

A study of the way to solve the above problems has led to the finding that compounding (a) a spherical silica of an average particle size of 0.1 ~ 3.0μm and a maximum particle size not more than 10μm, and (b) a spherical silica of an average particle size of 4 - 10μm and a maximum particle size not more than 50μm at a weight ratio of (a) / (a) + (b)] = 0.05 - 0.50 enables suppression of sedimentation without losing flow characteristics. Any silica which satisfies these requirements can be used without limitations. Each of (a) and (b) may comprise a single kind of silica a blend of two or more kinds.

The particle size distribution and average particle size were measured by a laser-type method (Horiba LA-500) where the average particle size was based on a median size.

The liquid potting material ofthis invention, as needed, in addition to the above essential components may contain other resins, a catalyst for promoting the reaction, a diluent, a pigment, a coupler, a leveling agent, a defoamer, or the like. The liquid potting material is prepared by dispersing and kneading each of these components and additives and the like, using a three-roll mill followed by vacuum-defoaming.

## EXAMPLES OF THIS INVENTION

The present invention is now specifically described by the following examples of this invention:

### Example 1

The following ingredients were dispersed and kneaded on a three-roll mill and vacuum-defoamed to give a liquid epoxy resin potting material. The resultant epoxy resin potting material was used to pot a PPGA package, followed by oven-curing for three hours at 165°C to give a semiconductor package. The following methods of evaluation were used to confirm the delamination, if any, between the semiconductor chip and print baseboard; the presence, if any, of cracks; and filler sedimentation, and the results are given in Table 1.

· Bisphenol-F-type epoxy resin: 100 parts by weight
(Epoxy equivalent 161; viscosity at 25°C, 1.5Pa·s)

· 3,3'-diethyl-4,4'-diaminodiphenylmethane: 40 parts by weight

· Epoxidized polybutadiene: 6 parts by weight
(Number average molecular weight: 1800; epoxy equivalent 250)

· Spherical fused silica (1): 340 parts by weight
(Average particle size 6μm; maximum particle size 48μm)

· Spherical fused silica (2): 40 parts by weight
(Average particle size 0.5μm; maximum particle size 2μm)

· Composition viscosity:
E-type viscometer, 2.5rpm, 25°C

· Ease of filling into packages:
The sample was dispensed into a PPGA package at 80°C to confirm the condition of filling in the cavities 5 minutes later.

· Confirming of delamination or cracks:

(1) After curing
(2) After PCT (pressure cooker test) treatment at 125°C/2.3atm for 168 hours
(3) After T/C (cold-heat cycle test) treatment under - 65°C/30 minutes--150°C/30 minutes, 1,000 cycles. The delamination between the semiconductor chips and print baseboard, and any crack formation was tested using a supersonic defect tester (hereinafter abbreviated as SAT).

· Filler sedimentation:
A cured package was cut across and observed for the cross-section using a scanning electron microscope (hereinafter abbreviated as SEM) to measure the extent of sedimentation from the top ofthe cured product.

The sample of Example 1 showed no delamination or cracks. The filler sedimentation indicated good reliability. The number of packages used for each evaluation were 10. The results are summarized in Table 1.

**For Examples 2-6 and Comparative Examples 1-6**

Liquid epoxy resin potting materials were obtained in a manner similar to that of Example 1, except for using the compounding recipes shown in Table 1 and Table 2, thereby potting the PPGA package to evaluate the reliability of these samples. The results are given in Tables 1 and 2.
The following ingredients were used in Example 1 and other examples:

· Bisphenol-F-type epoxy resin: (manufactured by Dainippon Ink Kagaku Kogyo KK, EXA-830LVP, epoxy equivalent 161; viscosity at 25°C 1.5Pa·s)

· Bisphenol-A-type epoxy resin: (1): (manufactured by Dainippon Ink Kagaku Kogyo KK, EXA-850CRP, epoxy equivalent 171; viscosity at 25 °C 4.5Pa·s)

· Bisphenol-A-type epoxy resin: (2): (manufactured by Yuka Shell Epoxy KK; Epikote 1001, epoxy equivalent 470, solid)

· 1,6-dihydroxynaphthalene-type epoxy resin: (manufacture by Dainippon Ink Kagaku Kogyo KK, HP-4032D, epoxy equivalent 140, viscosity at 25°C 25Pa·s)

· 3,3'-diethyl-4,4'-diaminodiphenylmethane; (manufactured by Nippon Kayaku KK, Kayahard A-A)

· 3,3'-5,5-tetramethyl-4,4'-diaminodiphenylmethane; (manufactured by Nippon Kayaku K.K., Kayabond C-200)

- Epoxidized polybutadiene: (manufactured by Nippon Sekiyu Kagaku KK, E-1800-6.5, number-average molecular weight 1800, epoxy equivalent 250)

- Spherical fused silica (1): (manufactured by Denki Kagaku Kogyo KK, FB-30, average particle size 6μm, maximum particle size 48μm)

- Spherical fused silica (2): (manufactured by Admatex KK, SO-25R, average particle size 0.5μm, maximum particle size 2μm)

- Spherical fused silica (3); (manufactured by Admatex KK, SO-32R, average particle size 2.0μm, maximum particle size 8μm)

- Spherical fused silica (4): (a blend [weight ratio 1:1] of the above spherical fused silicas (2) and (3); average particle size 1.0μm, maximum particle size 8μm)

- Spherical fused silica (5): (manufactured Denki Kagaku Kogyo KK, FB-25S, average particle size 17.0μm, maximum particle size 75μm)

TABLE 1

|  | Examples | | | | | |
| --- | --- | --- | --- | --- | --- | --- |
|  | 1 | 2 | 3 | 4 | 5 | 6 |
| Compounding (parts by weight) |  |  |  |  |  |  |
| Bisphenol-F-type epoxy resin | 100 | 100 | 100 |  | 100 | 50 |
| Bisphenol-A-type epoxy resin (1) |  |  |  | 100 |  |  |
| 1,6-dihydroxynaphthalene-type epoxy resin |  |  |  |  |  | 50 |
| 3,3'-diethyl-4,4'-diaminodiphenylmethane | 40 | 40 | 40 | 37 | 32 | 43 |
| 3,3'-5,5'-tetramethyl-4,4'-diaminodiphenylmethane |  |  |  |  | 5 |  |
| Epoxidized polybutadiene | 6 | 6 | 6 | 6 | 6 | 6 |
| Spherical fused silica (1) | 340 | 230 | 230 | 340 | 300 | 260 |
| Spherical fused silica (2) | 40 | 160 |  | 40 |  | 110 |
| Spherical fused silica (3) |  |  |  |  | 80 |  |
| Spherical fused silica (4) |  |  | 160 |  |  |  |
|  |  |  |  |  |  |  |
| Physical Properties |  |  |  |  |  |  |
| Composition viscosity (Pa·s) | 20 | 17 | 18 | 30 | 19 | 35 |
|  |  |  |  |  |  |  |
| Ease of package filing | good | good | good | good | good | good |
|  |  |  |  |  |  |  |
| Delamination | After Curing | 0 | 0 | 0 | 0 | 0 | 0 |
|  | After PCT | 0 | 0 | 0 | 0 | 0 | 0 |
|  | After T/C | 0 | 0 | 0 | 0 | 0 | 0 |
|  |  |  |  |  |  |  |
| Cracks | After Curing | 0 | 0 | 0 | 0 | 0 | 0 |

TABLE 1   (continued)

| | | Examples | | | | | |
|---|---|---|---|---|---|---|---|
| Physical Properties | | | | | | | |
| | After PCT | 0 | 0 | 0 | 0 | 0 | 0 |
| | After T/C | 0 | 0 | 0 | 0 | 0 | 0 |
| | | | | | | | |
| Filler sedimentation (µm) | | 24 | Not more than 3 | Not more than 3 | 20 | 10 | 5 |

TABLE 2

| | | Comparative Examples | | | | | |
|---|---|---|---|---|---|---|---|
| | | 1 | 2 | 3 | 4 | 5 | 6 |
| Compounding (parts by weight) | | | | | | | |
| Bisphenol-F-type epoxy resin | | 100 | 100 | 100 | 100 | 100 | 50 |
| Bisphenol-A-type epoxy resin (2) | | | | | | | 70 |
| 3,3'-diethyl-4,4'-diaminodiphenylmethane | | 40 | 40 | 40 | 40 | 40 | 40 |
| Epoxidized polybutadiene | | 6 | 6 | | 6 | 6 | 6 |
| Spherical fused silica (1) | | 380 | 420 | 230 | 110 | | 340 |
| Spherical fused silica (2) | | | 280 | 160 | 260 | | 40 |
| Spherical fused silica (3) | | | | | | 380 | |
| | | | | | | | |
| Physical Properties | | | | | | | |
| Composition viscosity (Pa·s) | | 30 | 120 | 17 | 130 | 27 | 125 |
| | | | | | | | |
| Ease of package filling | | good | poor | good | poor | good | poor |
| | | | | | | | |
| Delamination | After Curing | 0 | - | 0 | - | 0 | - |
| | After PCT | 0 | - | 8 | - | 0 | - |
| | After T/C | 3 | - | 0 | - | 4 | - |
| | | | | | | | |
| Cracks | After Curing | 0 | - | 0 | - | 0 | - |
| | After PCT | 0 | - | 3 | - | 0 | - |
| | After T/C | 5 | - | 0 | - | 8 | - |
| | | | | | | | |
| Filler sedimentation (µm) | | 80 | - | Not more than 3 | - | 100 | - |

As illustrated in the above Examples 1-6, potting a semiconductor package with a liquid potting material of this invention can provide a highly reliable semiconductor package free of delamination or cracks in a pressure cooker test or cold-heat cycle test without adversely affecting flow or workability, thereby providing much industrial advantage.

**Claims**

1. A liquid epoxy resin potting material comprising (A) one or more liquid epoxy resins, (B) a liquid alkylated diaminodiphenylmethane, (C) an epoxidized polybutadiene, and (D) an inorganic filler, wherein the ratios of the individual components in weight ratios are:

$$(A)/[(A)+(B)] = 0.65 - 0.80$$

and

$$(D) / [(A) + (B) + (C) + (D)] = 0.50 - 0.80.$$

**characterized in that**

$$(C)/[(A)+(B)] = 0.01-0.05,$$

whereby a relaxation effect against thermal stresses is produced.

2. A liquid epoxy resin potting material, as claimed in claim 1, wherein at least 50% by weight of component (A) comprises a liquid epoxy resin having a viscosity not higher than 8Pa.s/25°C.

3. A liquid epoxy resin potting material, as claimed in claim 1, wherein the (D) inorganic filler comprises (a) a spherical silica having an average particle size of 0.1 µm to 3.0 µm and a maximum particle size not more than 10 µm and (b) a spherical silica of an average particle size of 4 µm to 10 µm and a maximum particle size of not more than 50 µm, with the compounding ratio in weight being (a) / [(a) +(b)] = 0.05 - 0.50.

4. A liquid epoxy resin potting material, as set forth in claim 2, wherein the (D) inorganic filler comprises (a) a spherical silica having an average particle size of 0.1 µm to 3.0 µm and a maximum particle size not more than 10 µm and (b) a spherical silica of an average particle size of 4 µm to 10 µm and a maximum particle size of not more than 50 µm, with the compounding ratio in weight being (a) / [(a) +(b)] = 0.05 - 0.50.

**Patentansprüche**

1. Eine flüssige Epoxyharzvergussmasse die Folgendes aufweist

(A) ein flüssiges Epoxyharz oder mehrere flüssige Epoxyharze,
(B) ein flüssiges alkyliertes Diaminodiphenylmethan,
(C) ein epoxidisiertes Polybutadien und
(D) einen anorganische Füllstoff, wobei die Verhältnisse der einzelnen Komponenten in Gewichtsverhältnissen die Folgenden sind:

$$(A)/[(A)+(B)] = 0,65 - 0,80$$

und

$$(D) / [(A)+(B)+(C)+(D)] = 0,50 - 0,80.$$

**dadurch gekennzeichnet, dass**

$$(C)/[(A)+(B)] = 0,01-0,05,$$

wobei ein Relaxationseffekt gegenüber thermischen Beanspruchungen erzeugt wird.

**2.** Eine flüssige Epoxyharzvergussmasse nach Anspruch 1, wobei mindestens 50 Gew.-% der Komponente (A) ein flüssiges Epoxyharz aufweisen mit einer Viskosität, die nicht höher ist als 8 Pa.s/25° C.

**3.** Eine flüssige Epoxyharzvergussmasse nach Anspruch 1, wobei das Merkmal (D), der anorganische Füllstoff, Folgendes aufweist:

(a) sphärisches Siliziumdioxid mit einer durchschnittlichen Teilchengröße von 0,1 μm bis 3,0 μm und einer maximalen Teilchengröße von nicht mehr als 10 μm, und
(b) sphärisches Siliziumdioxid mit einer durchschnittlichen Teilchengröße von 4 μm bis 10 μm und bei einer maximalen Teilchengröße von nicht mehr als 50 μm, wobei das Verbindungsverhältnis in Gewicht folgendes ist:

$$(a)/[(a)+(b)] = 0,05 - 0,50.$$

**4.** Eine flüssige Epoxyharzvergussmasse nach Anspruch 2, wobei das Merkmal (D), der anorganische Füllstoff Folgendes aufweist:

(a) sphärisches Siliziumoxid mit einer durchschnittlichen Teilchengröße von 0,1 μm bis 3,0 μm und einer maximalen Teilchengröße von nicht mehr als 10 μm, und
(b) sphärisches Siliziumoxid mit einer durchschnittlichen Teilchengröße von 4 μm bis 10 μm und bei einer maximalen Teilchengröße von nicht mehr als 50 μm, wobei das Verbindungsverhältnis in Gewicht folgendes ist:

$$(a)/[(a)+(b)] = 0,05 - 0,50.$$

## Revendications

**1.** Matériau liquide d'enrobage à base de résine époxyde comprenant (A) une ou plusieurs résines époxyde liquides, (B) un diaminodiphénylméthane alkylé liquide, (C) un polybutadiène époxydé, et (D) une charge inorganique, dans lequel les rapports des composants individuels en rapports pondéraux sont :

$$(A)/[(A)+(B)] = 0,65 \ à \ 0,80$$

et

$$(D)/[(A)+(B)+(C)+(D)] = 0,50 \ à \ 0,80,$$

**caractérisé en ce que**

$$(C)/[(A)+(B)] = 0,01 \ à \ 0,05,$$

de sorte qu'un effet de relaxation des contraintes thermiques se produit.

**2.** Matériau liquide d'enrobage à base de résine époxyde, selon la revendication 1, dans lequel au moins 50% en poids du composant (A) sont constitués d'une résine époxyde liquide ayant une viscosité ne dépassant pas 8 Pa. s/25°C.

**3.** Matériau liquide d'enrobage à base de résine époxyde, selon la revendication 1, dans lequel la charge inorganique (D) comprend (a) une silice sphérique ayant une taille moyenne de particules allant de 0,1 μm à 3,0 μm et une taille maximale de particules ne dépassant pas 10 μm et (b) une silice sphérique d'une taille moyenne de particules allant de 4 μm à 10 μm et d'une taille maximale de particules ne dépassant pas 50 μm, le rapport pondéral de formulation étant (a)/[(a)+(b)] = 0,05 à 0,50.

4. Matériau liquide d'enrobage à base de résine époxyde, selon la revendication 2, dans lequel la charge inorganique (D) comprend (a) une silice sphérique ayant une taille moyenne de particules allant de 0,1 μm à 3,0 μm et une taille maximale de particules ne dépassant pas 10 μm et (b) une silice sphérique d'une taille moyenne de particules allant de 4 μm à 10 μm et d'une taille maximale de particules ne dépassant pas 50 μm, le rapport pondéral de formulation étant (a)/[(a)+(b)] = 0,05 à 0,50.